# EUROPÄISCHE PATENTSCHRIFT

(11) **EP 1 437 241 B1**
(45) Veröffentlichungstag und Bekanntmachung des Hinweises auf die Patenterteilung: **28.03.2007**
(21) Anmeldenummer: 03450283.1
(22) Anmeldetag: 19.12.2003
(51) Int. Cl.: B60D 1/46

(54) **Pick-up-hitch Anhängerkupplung**
Pick-up-hitch
Attelage avec dispositif de levage

(30) Priorität: 20.12.2002 AT 19152002
(43) Veröffentlichungstag der Anmeldung: 14.07.2004
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- EP-A- 0 184 489
- EP-A- 1 216 856
- GB-A- 2 380 720
- US-A- 5 692 573

## Beschreibung

Die Erfindung betrifft eine Pick-Up-Hitch mit einer Anbaukonsole und einer mit der Anbaukonsole schwenkbar verbundenen Schwenkkonsole, wobei eine Kupplungskugel mit der Schwenkkonsole, insbesondere mit einem in der Schwenkkonsole verschiebbar gelagerten Schlittenelement, verbunden ist und dass eine Niederhaltervorrichtung mit der Anbaukonsole verbunden ist.

Bekannte derartige Pick-Up-Hitch werden als Kupplungsvorrichtungen verwendet. Dabei ist die Anbaukonsole an einem Zugfahrzeug od. dgl. befestigt. Ein mit der Schwenkkonsole verbundener Kupplungshaken kann bis zum Untergrund abgesenkt werden, wobei eine im Bereich des Untergrunds angeordnete Zugöse eines Anhängers od. dgl. aufgenommen und durch Anheben der Schwenkkonsole mit dem Zugfahrzeug gekuppelt werden kann. Nachteilig an diesen bekannten Pick-Up-Hitch ist, dass sie eine nur geringe Fahrstabilität zwischen dem Zugfahrzeug und dem Anhänger aufweisen, wodurch die Sicherheit beeinträchtigt wird. Weiters ist nachteilig, dass die bekannte Pick-Up-Hitch im Betrieb eine große Lärmentwicklung aufweist und hohe dynamische Belastungen infolge von Stößen von der Anbaukonsole und der Schwenkkonsole aufgenommen werden müssen, wodurch eine große Dimensionierung der Bauteile bedingt ist.

Aus der EP 1 216 856 A2 geht eine Anhängerkupplung mit einer Anbaukonsole und einer Schwenkkonsole hervor, wobei eine Kupplungskugel mit der Schwenkkonsole und eine Niederhaltervorrichtung starr mit einer Anbaukonsole verbunden sind. Die Schwenkkonsole kann mit der Niederhaltervorrichtung mittels eines Befestigungsstiftes fixiert werden.

Aus der US 5 692 573 A ist eine Pick-Up-Hitch geht eine Anhängerkupplung mit einer Anbaukonsole und einer Schwenkkonsole hervor, wobei ein Kupplungshaken mit der Schwenkkonsole und eine Niederhaltervorrichtung starr mit einer Anbaukonsole verbunden sind. Die Schwenkkonsole kann mit der Niederhaltervorrichtung mittels eines Befestigungsstiftes fixiert werden.

Aufgabe der Erfindung ist es daher eine Pick-Up-Hitch der eingangs genannten Art anzugeben, bei der die Nachteile der bekannten Lösungen vermieden werden, bei der eine hohe Fahrstabilität gegeben ist, Stöße im Betrieb weitgehend vermieden werden, die eine geringe Lärmentwicklung und eine hohe Lebensdauer aufweist und die einfach und kostengünstig herstellbar ist.

Eine weitere Aufgabe der Erfindung ist es, eine Pick-Up-Hitch der eingangs genannten Art anzugeben, bei der die Schwenkkonsole einfach mit der Anbaukonsole verrastet und/oder geöffnet werden kann und ein sicherer Halt der Zugöse auf der Kupplungskugel gewährleistet werden kann.

Erfindungsgemäß wird dies dadurch erreicht, dass die Niederhaltervorrichtung gegenüber der Anbaukonsole federnd, hydraulisch oder pneumatisch gelagert ist und/oder die Niederhaltervorrichtung einen mittels eines Exzenterelementes betätigbaren Freigang aufweist, wobei der Freigang im gekuppelten Zustand gesperrt ist und mittels des Exzenterelementes vor dem Verschwenken der Schwenkkonsole in Richtung der Anbaukonsole freigegeben werden kann.

Dadurch ergibt sich der Vorteil, dass eine annähernd spielfreie Verbindung zwischen einem Zugfahrzeug und einem Anhänger herstellbar ist, wodurch die Fahrstabilität wesentlich verbessert wird und Stöße weitgehend vermieden werden. Ein weiterer Vorteil der Erfindung ist, dass bekannte Pick-Up-Hitch auf einfache Weise zu einer erfindungsgemäßen Pick-Up-Hitch umgerüstet werden können. Durch das Schlittenelement kann auf einfache Weise die Absenkbarkeit der Kupplungskugel vergrößert und gegebenenfalls auch ein Eindringen der Kupplungskugel in einen weichen Untergrund ermöglicht werden, wodurch auch in den Boden eingesunkene Zugösen mit der erfindungsgemäßen Pick-Up-Hitch gekuppelt werden können. Durch die Niederhaltervorrichtung kann ein unbeabsichtigtes Abheben der Zugöse von der Kupplungskugel auf einfache Weise verhindert werden. Die Schwenkkonsole kann gegebenenfalls aus dem gekuppelten Zustand in Richtung der Anbaukonsole verschwenkt werden kann, um eine Haltevorrichtung, insbesondere ein Hakenelement od. dgl. zu lösen. Weiters kann kann eine Mindestkraft vorgegeben werden, mit der die Niederhaltervorrichtung die Zugöse auf die Kupplungskugel drückt.

Gemäß einer anderen Ausführungsform der Erfindung kann vorgesehen sein, dass die Niederhaltervorrichtung ein Niederhalterelement, insbesondere eine Niederhalterschraube od. dgl., umfasst und dass das Niederhalterelement gegenüber der Niederhaltervorrichtung federnd, hydraulisch oder pneumatisch gelagert ist und/oder das Niederhalterelement einen mittels eines Exzenterelementes betätigbaren Freigang aufweist. Aufgrund der Reibung zwischen der Zugöse und der Niederhaltervorrichtung kommt es zu einem Materialverschleiß.

Durch die Ausbildung des Niederhalterelementes kann es bei einer Wartung und/oder Instandhaltung ausreichend sein, das Niederhalterelement auszutauschen, wodurch der Zeit- und/oder Materialbedarf gering gehalten werden kann. Weiters kann durch die Ausbildung des Niederhalterelementes auf einfache Weise eine Höheneinstellung ermöglicht werden. Bei dieser Ausbildung kann weiters die Niederhaltervorrichtung fest mit der Anbaukonsole verbunden sein und gegebenenfalls mit dieser einstückig ausgebildet sein, wobei dennoch eine Federwirkung zwischen dem Niederhalterelement und der Kupplungskugel sichergestellt werden kann.

In weiterer Ausbildung der Erfindung kann vorgesehen sein, dass das Niederhalterelement wenigstens eine Schmieröffnung aufweist. Durch die Schmieröffnung kann die Lebensdauer und Belastbarkeit der erfindungsgemäßen Pick-Up-Hitch verbessert werden.

Gemäß einer weiteren Ausgestaltung der Erfindung kann vorgesehen sein, dass die Kupplungskugel im gekuppelten Zustand gegenüber der Niederhaltervorrichtung nachgiebig, insbesondere federnd, gelagert ist. Durch die federnde Lagerung der Kupplungskugel kann der Niederhalter fest mit der Anbaukonsole verbunden sein und gegebenenfalls mit dieser einstückig ausgebildet sein, eine Federwirkung zwischen dem Niederhalterelement und der Kupplungskugel sichergestellt werden kann. Dabei kann eine Mindestkraft vorgegeben werden, mit der die Niederhaltervorrichtung die Zugöse auf die Kupplungskugel drückt.

In weiterer Ausgestaltung der Erfindung kann vorgesehen sein, dass ein mit der Kupplungskugel einstückig ausgebildetes oder mit der Kupplungskugel unmittelbar verbundenes Kugelaufnahmeelement vorgesehen ist. Durch das Kugelaufnahmeelement kann eine gute Kraftübertragung von der Kupplungskugel auf das Zugfahrzeug sichergestellt werden. Dabei kann vorgesehen sein, dass das Kugelaufnahmeelement durch andere Aufnahmeelemente mit einem Haken od. dgl. ausgetauscht werden kann, wodurch die Einsatzmöglichkeiten der erfindungsgemäßen Pick-Up-Hitch verbessert werden und diese bei einer Vielzahl an Anhängern verwendet werden kann.

Gemäß einer anderen Ausführungsform der Erfindung kann vorgesehen sein, dass im gekuppelten Zustand das Kugelaufnahmeelement gegenüber der Niederhaltervorrichtung nachgiebig, insbesondere federnd, gelagert ist. Durch diese Ausbildung kann auf einfache Weise eine nachgiebige Lagerung der Kupplungskugel erreicht werden.

In diesem Zusammenhang kann in weiterer Ausgestaltung der Erfindung vorgesehen sein, dass das Kugelaufnahmeelement eine elastische Auflage umfasst, wodurch die nachgiebige Lagerung besonders einfach realisiert werden kann.

Gemäß einer weiteren Ausgestaltung der Erfindung kann vorgesehen sein, dass das Kugelaufnahmeelement zumindest einen eine Schwenkachse ausbildenden Querfortsatz und/oder eine die Schwenkachse ausbildende Queröffnung aufweist. Dadurch kann die durch die nachgiebige Lagerung bedingte Bewegungsfreiheit der Kupplungskugel eingeschränkt und die Bewegungsbahn der Kupplungskugel vorgegeben werden.

In Weiterbildung der Erfindung kann vorgesehen sein, dass das Kugelaufnahmeelement und das Schlittenelement einstückig ausgebildet sind, wodurch eine besonders hohe zulässige Auflagerlast der Kupplungskugel erreicht werden kann.

Gemäß einer anderen Ausgestaltung der Erfindung kann vorgesehen sein, dass die Kupplungskugel mit dem Kugelaufnahmeelement verschraubt ist. Durch die Verschraubung kann eine gleichförmige Kraftübertragung zwischen der Kupplungskugel und dem Kugelaufnahmeelement sichergestellt werden.

Gemäß einer Weiterbildung der Erfindung kann vorgesehen sein, dass die Kupplungskugel zumindest eine Schmieröffnung aufweist. Durch die Schmieröffnung kann die Reibung zwischen der Kupplungskugel und der Zugöse verringert werden, wodurch die Lebensdauer und Belastbarkeit der erfindungsgemäßen Pick-Up-Hitch verbessert wird.

Die Erfindung wird unter Bezugnahme auf die beigeschlossenen Zeichnungen, in welchen Ausführungsformen dargestellt sind, näher beschrieben. Dabei zeigt:
Fig. 1 eine Schrägansicht auf eine Ausführungsform einer Pick-Up-Hitch;
Fig. 2 eine Schrägansicht auf die Pick-Up-Hitch gemäß Fig. 1 mit verschwenkter Schwenkkonsole;
Fig. 3 eine Schrägansicht auf eine erfindungsgemäße Pick-Up-Hitch mit befestigter Niederhaltervorrichtung;
Fig. 4 eine Seitenansicht auf die Pick-Up-Hitch gemäß Fig. 3;
Fig. 5 eine Schrägansicht auf die Pick-Up-Hitch gemäß Fig. 1 mit freigegebenen Hakenelement; und
Fig. 6 eine Schrägansicht einer Ausführungsform der Niederhaltervorrichtung;
Fig. 7 eine Schrägansicht einer weiteren Ausführungsform der Niederhaltervorrichtung;
Fig. 8 die Niederhaltervorrichtung gemäß Fig. 7, wobei verdeckte Kanten strichliert eingezeichnet sind;
Fig. 9 eine Schrägansicht auf eine Ausführungsform einer erfindungsgemäßen Pick-Up-Hitch mit der Niederhaltervorrichtung gemäß Fig. 7;
Fig. 10 eine Schrägansicht einer anderen Ausführungsform der Niederhaltervorrichtung;
Fig. 11 eine weitere Schrägansicht auf die Niederhaltervorrichtung gemäß Fig. 10;
Fig. 12 eine Schrägansicht einer weiteren Ausführungsform eines erfindungsgemäßen Pick-Up-Hitch;
Fig. 13 eine Schrägansicht der Pick-Up-Hitch nach Fig. 12;
Fig. 14 die Pick-Up-Hitch gemäß Fig. 13 im Schnitt;
Fig. 15 bis 17 verschiedene Ausführungsformen eines Kugelaufnahmeelementes und einer Kupplungskugel für eine Pick-Up-Hitch gemäß Fig. 12 in Schrägansicht.

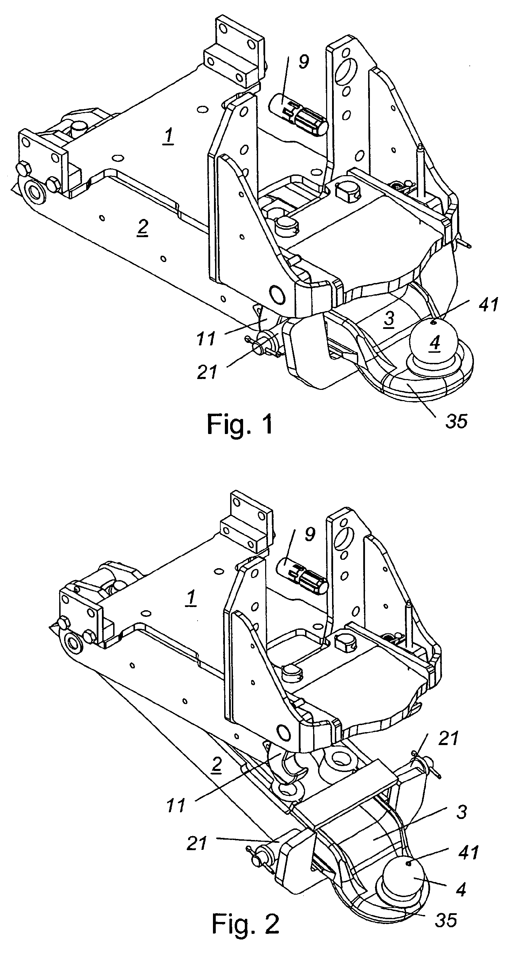

In Fig. 1 ist eine Ausführungsform einer Pick-Up-Hitch mit einer Anbaukonsole 1 und einer mit der Anbaukonsole 1 schwenkbar verbundenen Schwenkkonsole 2 dargestellt, wobei mit der Schwenkkonsole 2 eine Kupplungskugel 4 verbunden ist. Die Pick-Up-Hitch kann als Kupplungsvorrichtung verwendet werden, wobei die Kupplungskugel 4 zumindest annähernd bis zum Untergrund abgesenkt werden kann. Dort kann eine Zugöse aufgenommen werden und durch Hochschwenken der Schwenkkonsole die Zugöse mit der Pick-Up-Hitch gekuppelt werden.

Eine größere Absenkung der Kupplungskugel kann erreicht werden, wenn die Kupplungskugel 4 mit einem in der Schwenkkonsole 2 verschiebbar gelagerten Schlittenelement 3 verbunden ist. Dadurch kann auf einfache Weise sichergestellt werden, dass die Kupplungskugel 4 gegebenenfalls auch in den Untergrund eingebracht werden kann. Dies kann erforderlich sein, falls die anzukuppelnde Zugöse in einen weichen Untergrund od. dgl. eingesunken ist.

In Fig. 2 ist die Schwenkkonsole 2 gegenüber der Anbaukonsole 1 verschwenkt dargestellt.

Um die Länge der Schwenkkonsole gering halten zu können, kann vorgesehen sein, dass die Anbaukonsole vertikal verschiebbar mit einem Zugfahrzeug od. dgl. verbunden ist und die Bewegung der Kupplungskugel 4 zum Untergrund durch die Überlagerung der Absenkbewegung der Anbaukonsole 1 und der Schwenkbewegung der Schwenkkonsole 2 erfolgt.

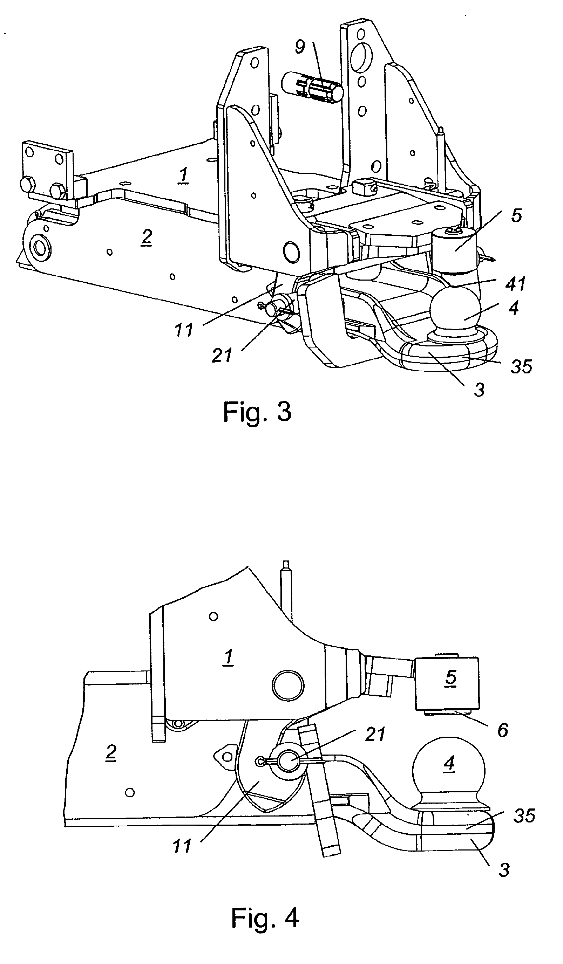

Das Abheben der Zugöse im gekuppelten Zustand kann auf einfache Weise durch eine Niederhaltervorrichtung 5 unterbunden werden. Die Niederhaltervorrichtung 5 ist, wie in Fig. 3 und 4 dargestellt, mit der Anbaukonsole 1 verbunden sein.

Im gekuppelten Zustand kann vorgesehen sein, dass die Schwenkkonsole 2 gegenüber der Anbaukonsole 1 mittels einer Verriegelungsvorrichtung verriegelbar ist. Die Verriegelungsvorrichtung kann insbesondere zumindest ein Hakenelement 11 und einen Vorsprung 21 od. dgl. umfassen. Um das Hakenelement 11 zu lösen und die Schwenkkonsole 2 freizugeben ist eine Verschwenkung der Schwenkkonsole 2 in Richtung der Anbaukonsole 1 erforderlich. Bei dieser Bewegung wird gegebenenfalls die Zugöse gegen die Niederhaltervorrichtung 5 gedrückt. Die auftretenden Spannungen können begrenzt werden, wenn die Kupplungskugel 4 gegenüber der Niederhaltervorrichtung 5 im gekuppelten Zustand nachgiebig und/oder hydraulisch, pneumatisch od. dgl. gelagert ist und/oder mittels eines

Freigangs od. dgl. eine zusätzliche Relativbewegung der Niederhaltervorrichtung 5 gegenüber der Kupplungskugel 4 ermöglicht wird.

Dabei kann die Niederhaltervorrichtung 5 gegenüber der Anbaukonsole 1 federnd und/oder hydraulisch, pneumatisch od. dgl. gelagert sein. Um die maximale Verschwenkung der Schwenkkonsole 2 in Richtung der Anbaukonsole 1 zu begrenzen kann ein Anschlag od. dgl. ausgebildet sein, wodurch ein unbeabsichtigtes Abheben der Zugöse von der Kupplungskugel 4 im gekuppelten Zustand unterbunden werden kann.

Es kann auch ein Freigang od. dgl. vorgesehen sein, der mittels einem Exzenterelement od. dgl. betätigbar ist. Dabei kann mittels des Exzenterelementes vor dem Verschwenkung der Schwenkkonsole 2 in Richtung der Anbaukonsole 1 der Freigang, der im gekuppelten Zustand gesperrt ist, freigegeben werden, wodurch ein einfaches Lösen der Verriegelungsvorrichtung sichergestellt werden kann.

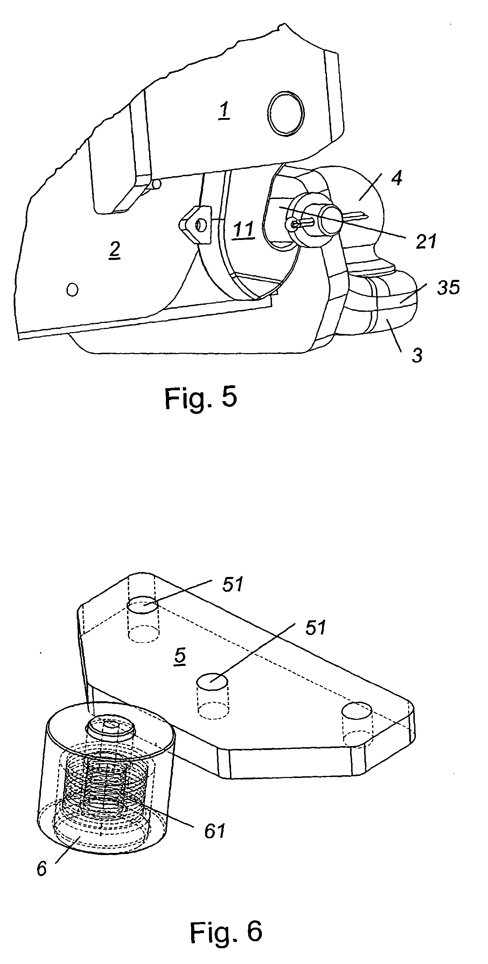

In Fig. 6 ist eine Ausführungsform der Niederhaltervorrichtung 5 dargestellt. Die Niederhaltervorrichtung 5 umfaßt ein Niederhalterelement 6, welches insbesondere als Niederhalterschraube od. dgl. ausgebildet sein kann. Durch das Niederhalterelement 6 kann auf einfache Weise eine Höhenverstellung vorgesehen werden, wodurch Herstellungstoleranzen und/oder Abrieb ausgeglichen werden können und eine gute und sichere Verbindung zwischen der Pick-Up-Hitch und der Zugöse sichergestellt werden kann.

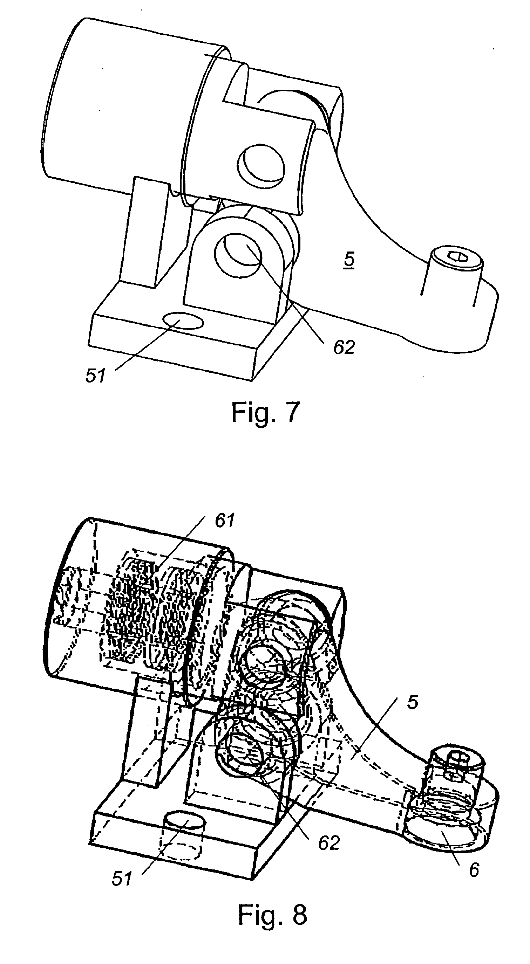

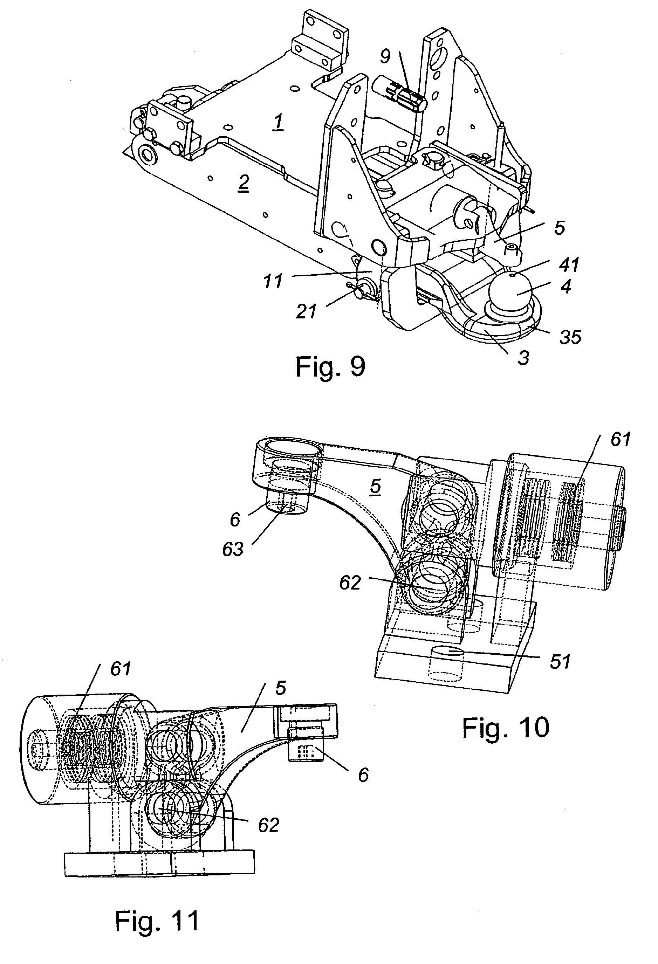

In den Fig. 7, 8, 10 und 11 sind Ausführungsformen der Niederhaltervorrichtung 5 gezeigt, die jeweils um eine Achse 62 verschwenkbar und mittels des Federelementes 61 federnd gelagert sind.

In Fig. 8 ist eine Pick-Up-Hitch mit der Niederhaltervorrichtung gemäß den Fig. 7 und 8 gezeigt.

Aus Fig. 6 ist ersichtlich, dass das Niederhalterelement 6 gegenüber der Niederhaltervorrichtung 5 federnd gelagert sein kann, wobei die Federwirkung mittels Tellerfedern, Spiralfedern, Körper aus einem elastischen Material od. dgl. erreicht werden kann. Durch diese gefederte Lagerung kann sichergestellt werden, dass die Zugöse im gekuppelten Zustand mit einer vorgebbaren Kraft auf die Kupplungskugel 4 gedrückt wird. Weiters kann durch diese gefederte Lagerung sichergestellt werden, dass die Schwenkkonsole 2 aus dem gekuppelten Zustand in Richtung der Anbaukonsole 1 verschwenkt werden kann, wodurch ein Lösen der Verriegelungsvorrichtung, insbesondere der Hakenelemente 11, ermöglicht wird.

Die Lebensdauer des Niederhalterelementes 6 kann erhöht werden, wenn das Niederhalterelement 6 wenigstens eine Schmieröffnung 63 aufweist. Dadurch kann die Reibung zwischen dem Niederhalterelement 6 und der Zugöse verringert werden.

Insbesondere bei einer gefederten Lagerung des Niederhalterelementes 6 kann auch eine feste Verbindung zwischen der Niederhaltervorrichtung 5 und der Anbaukonsole 1 vorgesehen sein, wobei die Niederhaltervorrichtung Befestigungsöffnungen 51 für die Aufnahme von Schrauben od. dgl. aufweisen kann. Bei anderen erfindungsgemäßen Ausführungsformen können die Anbaukonsole 1 und die Niederhaltervorrichtung 5 auch einstückig ausgebildet sein.

Die Kupplungskugel 4 ist mit einem Kugelaufnahmeelement 35 unmittelbar verbunden oder mit diesem einstückig ausgebildet, wodurch eine gute Krafteinleitung von der Kupplungskugel 4 in das Kugelaufnahmeelement 35 gesichert ist.

Bei den in den Fig. 1 bis 11 gezeigten Ausführungsformen der erfindungsgemäßen Pick-Up-Hitch ist das Kugelaufnahmelement 35 einstückig mit dem Schlittenelement 3 ausgebildet. Dadurch können besonders hohe Stützlasten von der Kupplungskugel 4 aufgenommen werden, da diese über das gesamte Schlittenelement 3 an die Anbaukonsole 1 übertragen werden können. In diesem Fall ist bei einem Umrüsten der erfindungsgemäßen Pick-Up-Hitch für einen Anhänger mit einer Ring-Zugöse das gesamte Schlittenelement 3 auszuwechseln.

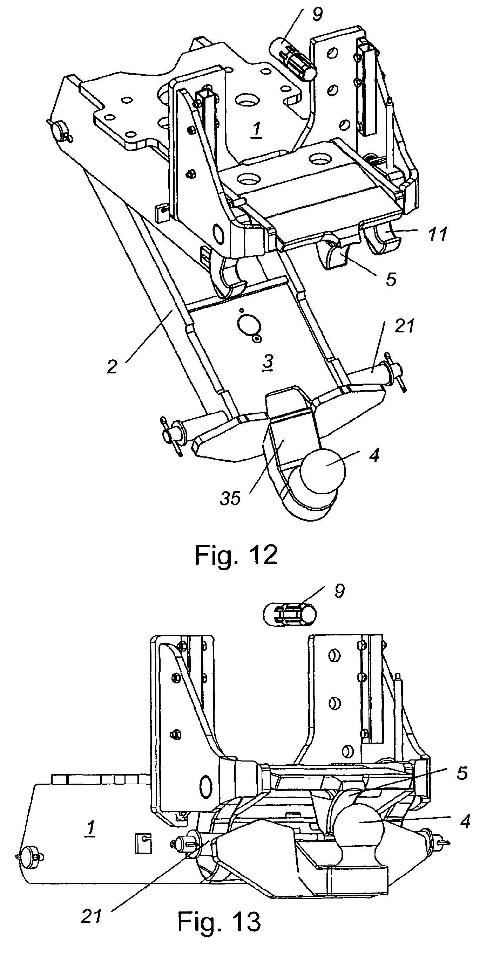

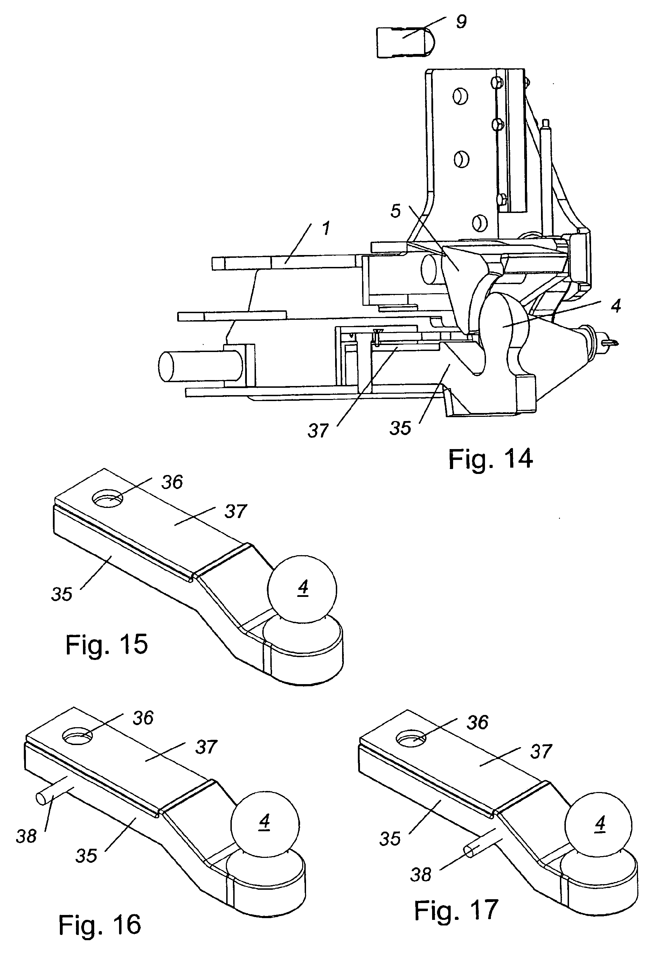

Sind geringere Stützlasten von der Kupplungskugel 4 aufzunehmen, so kann das Kugelaufnahmeelement 35 als mit dem Schlittenelement 3 verbindbares Modul ausgestaltet werden. Ein derartiges Kugelaufnahmeelement 35 ist bei der Ausführungsform gemäß der Fig. 12 bis 14 vorgesehen und in den Fig. 15 bis 17 dargestellt. Das Kugelaufnahmeelement 35 kann eine Befestigungsöffnung 36 für die Befestigung mit dem Schlittenelement 3 aufweisen.

Anstelle oder zusätzlich zu der nachgiebigen Lagerung der Niederhaltervorrichtung 5 und/oder des Niederhalterelementes 6 gegenüber der Anbaukonsole 1 kann auch die Kupplungskugel 4 nachgiebig, insbesondere federnd, gelagert sein. Dabei kann die Niederhaltervorrichtung 5 besonders einfach ausgestaltet sein und mit der Anbaukonsole 1 starr verbunden oder einstückig ausgebildet sein.

Eine derartige Lagerung der Kupplungskugel ergibt sich, wenn das Kugelaufnahmeelement 35 nachgiebig ausgestaltet ist, wobei beispielsweise die Kupplungskugel 4 in einem abkragenden und federnden Abschnitt des Kugelaufnahmeelementes 35 angeordnet sein kann. Bei anderen Ausführungsformen kann vorgesehen sein, dass im gekuppelten Zustand das Kugelaufnahmeelement 35 gegenüber der Niederhaltervorrichtung 5 nachgiebig, insbesondere federnd, gelagert ist.

Die in den Fig. 15 bis 17 dargestellten Kugelaufnahmeelemente 35 umfassen eine elastische Auflage 37, welche an der Oberseite und/oder an der Unterseite des Kugelaufnahmeelementes 35 angeordnet sein kann. Dadurch wird eine federnde Lagerung des Kugelaufnahmeelementes 35 und der Kupplungskugel 4 erreicht. Die in den Fig. 16 und 17 dargestellten Kugelaufnahmeelemente 35 weisen einen Querfortsatz 38 auf, der eine Drehachse der Bewegung aufgrund der nachgiebigen Lagerung ausbildet, wodurch diese Bewegung lediglich eine Schwenkbewegung um den Querfortsatz 38 sein kann. Durch die Anordnung des Querfortsatzes 38 kann dabei die Bahn der Relativbewegung der Kupplungskugel 4 gegenüber der Niederhaltervorrichtung 5 im gekuppelten Zustand vorgegeben und eine unkontrollierte Bewegung der Kupplungskugel 4 vermieden werden.

Die Kupplungskugel 4 kann mit dem Kugelaufnahmeelement 35 verschraubt sein, wodurch ein guter Halt der Kupplungskugel 4 und ein gleichförmiger Kraftübergang sichergestellt werden kann.

Die Reibung zwischen der Kupplungskugel 4 und einer Zugöse kann dadurch verringert werden, dass die Kupplungskugel 4 mit zumindest einer Schmieröffnung 41 ausgebildet ist. Dadurch kann sichergestellt werden, dass im gekuppelten Zustand ein Schmierfilm zwischen der Kupplungskugel 4 und der Zugöse ausgebildet ist.

Oberhalb der Pick-Up-Hitch kann eine Zapfwelle 9 od. dgl. vorgesehen sein.

Durch eine federnde Lagerung der Kupplungskugel 4 relativ zu der Niederhaltervorrichtung 5 im gekuppelten Zustand, welche, wie oben gezeigt durch eine federnde Lagerung der Kupplungskugel 4 und/oder eine federnde Lagerung der Niederhaltervorrichtung 5 und/oder eine federnde Lagerung des Niederhalterelementes 6 erreicht werden kann, kann auf einfache Weise sichergestellt werden, dass eine Zugöse mit einer vorbestimmbaren Mindestkraft auf die Kupplungskugel 4 angedrückt wird, wodurch das Fahrverhalten verbessert wird, da die Zugöse weitgehend spielfrei auf der Kupplungskugel 4 aufsitzt. Weiters kann die Schwenkkonsole gegen die Federung angehoben werden, um die Verriegelung mit der Anbaukonsole zu lösen und die Zugöse anschließend abzukuppeln. Die federnde Lagerung kann im wesentlichen jede Art einer reversiblen, nachgiebigen Lagerung sein.

## Patentansprüche

1. Pick-Up-Hitch mit einer Anbaukonsole (1) und einer mit der Anbaukonsole (1) schwenkbar verbundenen Schwenkkonsole (2), wobei eine Kupplungskugel (4) mit der Schwenkkonsole (2), insbesondere mit einem in der Schwenkkonsole (2) verschiebbar gelagerten Schlittenelement (3), verbunden ist und eine Niederhaltervorrichtung (5) mit der Anbaukonsole (1) verbunden ist, **dadurch gekennzeichnet, dass** die Niederhaltervorrichtung (5) gegenüber der Anbaukonsole (1) federnd, hydraulisch oder pneumatisch gelagert ist, und/oderdie Niederhaltervorrichtung (5) einen mittels eines Exzenterelementes betätigbaren Freigang aufweist, wobei der Freigang im gekuppelten Zustand gesperrt ist und mittels des Exzenterelementes vor dem Verschwenken der Schwenkkonsole (2) in Richtung der Anbaukonsole (1) freigegeben werden kann.

2. Pick-Up-Hitch nach Anspruch 1, **dadurch gekennzeichnet, dass** die Niederhaltervorrichtung (5) ein Niederhalterelement (6), insbesondere eine Niederhalterschraube od. dgl., umfasst und dass das Niederhalterelement (6) gegenüber der Niederhaltervorrichtung (5) federnd, hydraulisch oder pneumatisch gelagert ist und/oder das Niederhalterelement (6) einen mittels eines Exzenterelementes betätigbaren Freigang aufweist.

3. Pick-Up-Hitch nach Anspruch 2, **dadurch gekennzeichnet, dass** das Niederhalterelement (6) wenigstens eine Schmieröffnung (63) aufweist.

4. Pick-Up-Hitch nach einem der Ansprüche 1 bis 3, **dadurch gekennzeichnet, dass** die Kupplungskugel (4) im gekuppelten Zustand gegenüber der Niederhaltervorrichtung (5) nachgiebig, insbesondere federnd, gelagert ist.

5. Pick-Up-Hitch nach einem der Ansprüche 1 bis 4, **dadurch gekennzeichnet, dass** ein mit der Kupplungskugel (4) einstückig ausgebildetes oder mit der Kupplungskugel unmittelbar verbundenes Kugelaufnahmeelement (35) vorgesehen ist.

6. Pick-Up-Hitch nach Anspruch 5, **dadurch gekennzeichnet, dass** im gekuppelten Zustand das Kugelaufnahmeelement (35) gegenüber der Niederhaltervorrichtung (5) nachgiebig, insbesondere federnd, gelagert ist.

7. Pick-Up-Hitch nach Anspruch 6, **dadurch gekennzeichnet, dass** das Kugelaufnahmeelement (35) eine elastische Auflage (37) umfasst.

8. Pick-Up-Hitch nach Anspruch 6 oder 7, **dadurch gekennzeichnet, dass** das Kugelaufnahmeelement (35) zumindest einen eine Schwenkachse ausbildenden Querfortsatz (38) und/oder eine die Schwenkachse ausbildende Queröffnung aufweist.

9. Pick-Up-Hitch nach einem der Ansprüche 5 bis 8, **dadurch gekennzeichnet, dass** das Kugelaufnahmeelement (35) und das Schlittenelement (3) einstückig ausgebildet sind.

10. Pick-Up-Hitch nach einem der Ansprüche 5 bis 9, **dadurch gekennzeichnet, dass** die Kupplungskugel (4) mit dem Kugelaufnahmeelement (35) verschraubt ist.

11. Pick-Up-Hitch nach einem der Ansprüche 1 bis 10, **dadurch gekennzeichnet, dass** die Kupplungskugel (4) zumindest eine Schmieröffnung (41) aufweist.

## Claims

1. A pick-up hitch, comprising an attachment bracket (1) and a pivoting bracket (2) which is swivellably connected with the attachment bracket (1), with a hitch ball (4) being connected with the pivoting bracket (2), especially with a carriage element (3) which is held in a displaceable manner in the pivoting bracket (2), and a holding-down apparatus (5) is connected with the attachment bracket (1), **characterized in that** the holding-down apparatus (5) is held in a resilient, hydraulic or pneumatic way relative to the attachment bracket (1), and/or the holding-down apparatus (5) comprises a hitch which can be actuated by means of an eccentric element, with the hitch being blocked in the coupled state and being released by means of the eccentric element prior to pivoting the pivoting bracket (2) in the direction of the attachment bracket (1).

2. A pick-up hitch according to claim 1, **characterized in that** the holding-down apparatus (5) comprises a holding-down element (6), especially a holding-down screw or the like, and that the holding-down element (6) is held in a resilient, hydraulic or pneumatic manner relative to the holding-down apparatus (5) and/or the holding-down element (6) comprises a hitch which can be actuated by means of an eccentric element.

3. A pick-up hitch according to claim 2, **characterized in that** the holding-down element (6) comprises at least one lubricating opening (63).

4. A pick-up hitch according to one of the claims 1 to 3, **characterized in that** the hitch ball (4) is held in a yielding manner, especially resilient manner, relative to the holding-down apparatus (5).

5. A pick-up hitch according to one of the claims 1 to 4, **characterized in that** a ball receiving element (35) is provided which is formed integrally with the hitch ball (4) or is connected directly with the hitch ball.

6. A pick-up hitch according to claim 5, **characterized in that** in the coupled state the ball receiving element (35) is held in a yielding manner, especially resilient manner, relative to the holding-down apparatus (5).

7. A pick-up hitch according to claim 6, **characterized in that** the ball receiving element (35) comprises an elastic support (37).

8. A pick-up hitch according to claim 6 or 7, **characterized in that** the ball receiving element (35) comprises at least one transversal extension (38) arranged as a swiveling axis and/or a transversal opening forming a swiveling axis.

9. A pick-up hitch according to one of the claims 5 to 8, **characterized in that** the ball receiving element (35) and the carriage element (3) are arranged integrally.

10. A pick-up hitch according to one of the claims 5 to 9, **characterized in that** the hitch ball (4) is screwed together with the ball receiving element (35).

11. A pick-up hitch according to one of the claims 1 to 10, **characterized in that** the hitch ball (4) comprises at least one lubricating opening (41).

## Revendications

1. Attelage avec dispositif de levage avec une console de montage (1) et une console pivotante (2) reliée de façon pivotante à la console de montage (1), dans lequel une boule d'attelage (4) est reliée à la console pivotante (2), et en particulier à un élément de patin (3) supporté de façon coulissante dans la console pivotante (2), et un dispositif de retenue (5) est relié à la console de montage (1), **caractérisé en ce que** le dispositif de retenue (5) est supporté de façon élastique par rapport à la console de montage (1) par des moyens hydrauliques ou pneumatiques, et/ou le dispositif de retenue (5) présente un coupleur pouvant être actionné au moyen d'un élément excentrique, lequel coupleur est bloqué dans l'état attelé et peut être débloqué au moyen de l'élément excentrique avant que la console pivotante (2) pivote en direction de la console de montage (1).

2. Attelage avec dispositif de levage selon la revendication 1, **caractérisé en ce que** le dispositif de retenue (5) comprend un élément de retenue (6), en particulier une vis de retenue ou similaire et **en ce que** l'élément de retenue (6) est supporté de façon élastique par rapport au dispositif de retenue (5) par des moyens hydrauliques ou pneumatiques et/ou l'élément de retenue (6) présente un coupleur pouvant être actionné au moyen d'un élément excentrique.

3. Attelage avec dispositif de levage selon la revendication 2, **caractérisé en ce que** l'élément de retenue (6) possède au moins une ouverture de lubrification (63).

4. Attelage avec dispositif de levage selon l'une des revendications 1 à 3, **caractérisé en ce que** la boule d'attelage (4) est supportée dans l'état attelé de façon souple, en particulier élastique, par rapport au dispositif de retenue (5).

5. Attelage avec dispositif de levage selon l'une des revendications 1 à 4, **caractérisé en ce qu'**il est prévu un élément formant réceptacle pour la boule (35) formé d'un seul tenant avec la boule d'attelage (4) ou relié directement à la boule d'attelage.

6. Attelage avec dispositif de levage selon la revendication 5, **caractérisé en ce que** dans l'état attelé, l'élément formant réceptacle pour la boule (35) est supporté de manière souple, en particulier élastique, par rapport au dispositif de retenue (5).

7. Attelage avec dispositif de levage selon la revendication 6, **caractérisé en ce que** l'élément formant réceptacle pour la boule (35) possède un appui élastique (37).

8. Attelage avec dispositif de levage selon la revendication 6 ou 7, **caractérisé en ce que** l'élément formant réceptacle pour la boule (35) possède au moins une saillie transversale (38) formant l'axe de pivotement et/ou une ouverture transversale formant l'axe de pivotement.

9. Attelage avec dispositif de levage selon l'une des revendications 5 à 8, **caractérisé en ce que** l'élément formant réceptacle pour la boule (35) et l'élément de patin (3) sont formés d'un seul tenant.

10. Attelage avec dispositif de levage selon l'une des revendications 5 à 9, **caractérisé en ce que** la boule d'attelage (4) est vissée à l'élément formant réceptacle pour la boule (35).

11. Attelage avec dispositif de levage selon l'une des revendications 1 à 10, **caractérisé en ce que** la boule d'attelage (4) possède au moins une ouverture de lubrification (41).
